# DEMANDE DE BREVET EUROPEEN

(11) **EP 0 996 048 A2**
(43) Date de publication de la demande: **26.04.2000**
(21) Numéro de dépôt: 99203463.7
(22) Date de dépôt: 21.10.1999
(51) Int. Cl.: G05D 16/06

(54) **Régulateur de pression gazeuse**

(30) Priorité: 24.10.1998 DE 19849087
(71) Demandeur: Schlumberger Rombach GmbH, 76185 Karlsruhe (DE)
(72) Inventeur: Bax, Uwe, 76133 Karslruhe (DE); Stuck, Ottfried, 76448 Durmersheim (DE)
(74) Mandataire: Dupont, Henri

(57) **Abrégé**

L'invention concerne un régulateur de pression gazeuse comprenant un boîtier (1), lequel présente une entrée (2) et une sortie (3), ainsi qu'un dispositif à soupape (4) avec un passage de soupape disposé entre ladite entrée et sortie. Le dispositif à soupape comprend un piston (5) réglable par l'intermédiaire d'une membrane (8). Le piston sépare l'un de l'autre un disque de soupape (9) et un disque de fermeture (12). Le piston est pourvu d'une ouverture d'écoulement étroite débouchant dans le passage de soupape et peut, lors d'un manque de gaz, être mis en contact avec un siège de soupape (10) solidaire du boîtier pour fermer le dispositif à soupape (4). Il est prévue, entre le dispositif à soupape (9) et le disque de fermeture (12), une buse coulissante (14) formant avec le piston (5), le passage de soupape avec le siège d'étanchéité (20) pour le disque de fermeture (12), ladite buse est d'un côté contrainte élastiquement en direction du siège de soupape (10) du boîtier (1) et de l'autre côté est soumise à la pression d'entrée contraire à la tension du ressort.

## Description

L'invention concerne un régulateur de pression gazeuse selon le préambule de la revendication 1.

Un tel régulateur de pression gazeuse est connu par le document EP 0 739 504 B1, dans lequel il est prévu un piston portant un disque de soupape, le disque de soupape pouvant être déplacé par l'intermédiaire d'une membrane servant à la fixation d'une pression de sortie. Sur le piston est en outre monté, côté entrée, un disque de fermeture mobile dans la direction axiale et précontraint dans la position d'ouverture au moyen d'un ressort, de sorte que le passage de soupape est libéré lorsque la pression à la sortie est supérieure à une pression minimale. Le passage de soupape possède un siège de disque de fermeture avec lequel le disque de fermeture entre en contact lorsque la pression de sortie tombe au-dessous d'une pression minimale. La pression de sortie peut ensuite être rétablie au moyen d'une très petite ouverture d'écoulement ménagée dans le disque de fermeture et ainsi ouvrir à nouveau le passage de la soupape. Toutefois, un inconvénient réside dans le fait que la fonction de sécurité n'est pas séparée de l'étage de régulation proprement dit.

Le but de l'invention est donc de proposer un régulateur de pression gazeuse selon le préambule de la revendication 1 dans lequel la fonction de sécurité soit réalisée séparément de la fonction de régulation.

Ce problème est résolu par la partie caractérisante de la revendication 1. D'autres formes de réalisation de l'invention peuvent se déduire de la description qui va suivre et des revendications secondaires.

L'invention est décrite de façon plus précise par la suite à l'aide d'exemples de réalisation représentés sur les dessins annexés.
La Fig. 1 représente schématiquement, en coupe un régulateur de pression gazeuse en position de régulation.
La Fig. 2 montre un exemple de réalisation pratique du régulateur de pression gazeuse de la Fig. 1.

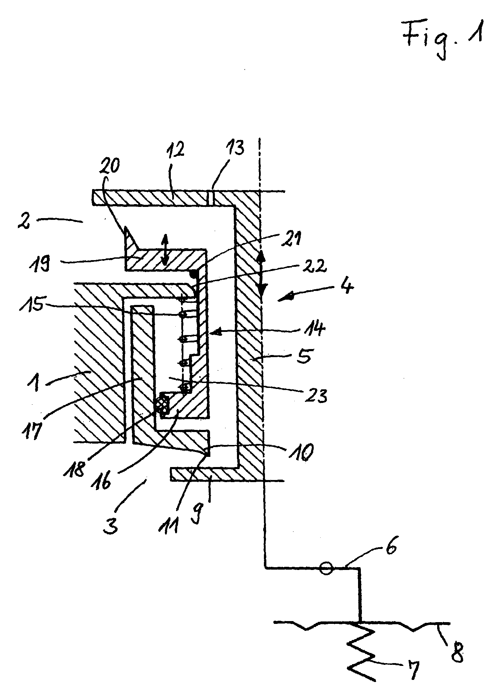

Le régulateur de pression gazeuse représenté sur la Fig. 1 comprend un boîtier 1 en plusieurs parties qui possède une entrée 2 et une sortie 3, entre lesquelles est disposé un dispositif à soupape 4. Le dispositif à soupape 4 comprend un piston 5 pouvant coulisser selon son axe longitudinal à l'intérieur du boîtier 1, le piston peut éventuellement être actionné par l'intermédiaire d'un mécanisme à levier 6, au moyen d'une membrane 8 précontrainte dans le boîtier 1 et soumise à un ressort 7.

Le piston 5 présente, à une extrémité, un disque de soupape 9 qui coopère avec un siège de soupape 10 annulaire, solidaire du boîtier, le siège de soupape étant muni d'une arête périphérique 11, laquelle forme un joint linéaire avec le disque de soupape 9, pour obturer la sortie 3.

Le piston 5 comprend en outre, à distance du disque de soupape 9, un disque de fermeture 12 qui est muni d'une très petite ouverture d'écoulement 13, en forme de buse, qui est reliée à l'entrée 2 d'une façon non représentée sur la Fig. 1.

De plus, il est prévu une buse coulissante 14 en forme de douille qui entoure le piston 5 dans la région comprise entre le disque de soupape 9 et le disque de fermeture 12, ladite buse pouvant coulisser dans la direction longitudinale du piston 5, et étant par rapport au boîtier 1 précontrainte par un ressort de compression 15, en direction du siège de soupape 10. La buse est disposée à distance du piston 5 pour former un passage pour le gaz, de sorte qu'un passage de soupape est formé entre d'une part la buse coulissante 14 et le disque de fermeture 12 avec le piston 5, et d'autre part entre le siège de soupape 10 et le disque de soupape 9.

En outre, la buse coulissante 14 possède, à proximité du siège de soupape 10, une partie annulaire 16 dirigée radialement vers l'extérieur, qui est d'une part en prise avec une partie 17 du siège de soupape 10 en forme de douille par l'intermédiaire d'une bague d'étanchéité 18, et qui constitue d'autre pari une butée pour le ressort 15 du côté de la buse coulissante 14. Par ailleurs, la buse coulissante 14 possède, dans le voisinage du disque de fermeture 12, une partie annulaire 19 dirigée vers l'extérieur et qui comporte un siège d'étanchéité périphérique 20 destiné à entrer en contact avec le disque de fermeture 12. De plus, la petite ouverture d'écoulement 13 se trouve radialement à l'intérieur par rapport au siège d'étanchéité 20. Finalement, il est prévu, dans l'angle formé entre la buse coulissante 14 et la pallie annulaire 19, un joint périphérique 21 qui peut être mis en prise avec le boîtier 1 et, plus précisément, avantageusement avec une arête annulaire 22 qui est inclinée selon la direction de coulissement de la buse coulissante 14. De cette façon, une chambre 23 du boîtier 1, qui abrite le ressort 15 et la partie annulaire 16, est étanchéifiée par rapport à l'entrée 2 lorsque la partie annulaire 16 est directement adjacente au siège de soupape 10.

Le régulateur de pression gazeuse est représenté sur la Fig. 1 dans la position de régulation, position dans laquelle la fente entre le disque de soupape 9 et le siège de soupape 10 possède, par suite de l'action de la membrane 8 sur le piston 5, une certaine dimension qui détermine la pression de sortie. A ce propos, la pression qui est appliquée à l'entrée 2 agit à la fois sur le disque de soupape 9 et aussi sur la partie annulaire 16, c'est-à-dire que la pression d'entrée agit à l'encontre du ressort 15 et qu'elle maintient ainsi la buse coulissante 14 dans une position déterminée par rapport au boîtier 1 et au disque de fermeture 12.

Etant donné que la pression d'entrée agit sur la partie annulaire 16 de la buse coulissante 14, lorsqu'il se manifeste un gradient de pression entre l'entrée 2 et la sortie 3, la buse coulissante 14 est repoussée en conséquence sous l'effet du ressort 15. Ceci modifie d'autant la dimension de la fente entre la buse coulissante 14 et le disque de fermeture 12.

Si la pression d'entrée décroît à partir d'une pression prédéterminée, la pression de sortie décroît aussi et le disque de soupape 9 ouvre de plus en plus le passage de soupape jusqu'à ce que, finalement, le disque de fermeture 12 ferme le passage de la soupape, la buse coulissante 14 se trouvant alors dans une position où elle est directement adjacente au siège 10 de la soupape par l'intermédiaire de sa partie annulaire 16. Ceci réalise une sécurité vis-à-vis du manque de gaz.

Toutefois, sous l'effet du passage d'une petite quantité de gaz à travers la petite ouverture d'écoulement 13, du gaz peut cependant pénétrer dans un système de canalisations placé en aval. Si tous les appareils consommateurs placés en aval du régulateur de pression gazeuse sont fermés, la pression de sortie peut s'établir et le disque de soupape 9 se déplace avec le piston 5 pour atteindre sa position de fermeture, tandis que la pression d'entrée maintient le disque de fermeture 12 et la buse coulissante 14 en contact étanche, c'est-à-dire que la buse coulissante 14 se déplace avec l'unité composée du disque de soupape 9, du piston 5 et du disque de fermeture 12. Ce n'est que lorsque le disque de soupape 9 prend sa position de fermeture que la pression régnant dans la fente entre la buse coulissante 14 et le piston 5 s'équilibre avec la pression d'entrée et que le ressort 15 repousse la buse coulissante 14 l'éloigneant du disque de fermeture 12, de sorte que le dispositif à soupape 4 s'ouvre de nouveau automatiquement lorsqu'on atteint une pression minimale déterminée. Il ne peut pas se produire de transmission brusque de la pression d'entrée vers la sortie.

Si la pression à l'entrée 2 atteint une pression maximale, cette pression déplace la buse coulissante 14 à l'encontre de la force du ressort 15, de sorte qu'à l'entrée 2, il se produit un étranglement ou une fermeture au moment où l'arête d'étanchéité 20 de la buse coulissante 14 entre en prise avec le disque de fermeture 12. A ce moment, seule la buse coulissante 14 est encore en contact avec le disque de fermeture 12. A ce moment, seule la petite ouverture d'écoulement 13 est encore ouverte sur la sortie 3.

Grâce à l'utilisation de la buse coulissante 14, la fonction de régulation du dispositif à soupape 4 est séparée de sa fonction de sécurité.

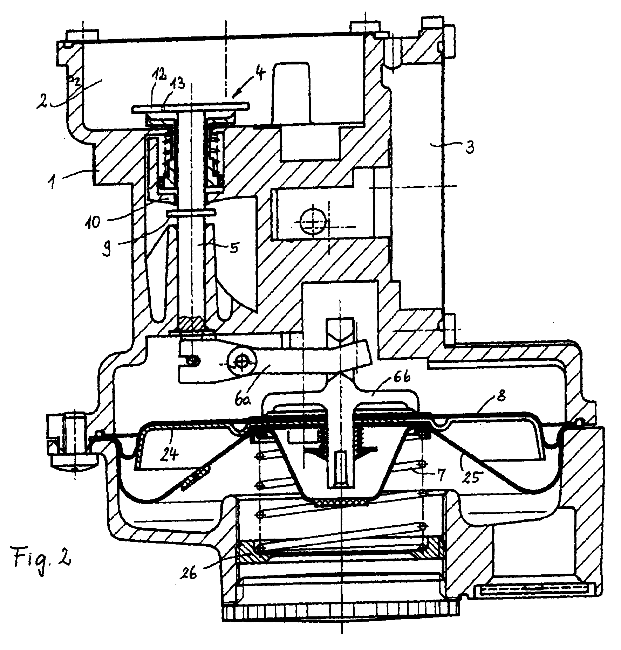

Dans l'exemple de réalisation de la Fig. 2, le piston 5 guidé dans le boîtier 1 est accroché dans une extrémité en forme de fourche d'un levier 6a d'un mécanisme à levier 6, le levier 6a étant accouplé de façon articulée â un poussoir 6b qui peut être commandé au moyen de la membrane 8 qui est précontrainte entre le poussoir 6b et un disque de membrane 24. Ici, une membrane de sécurité 25 est prévue entre la membrane 8 et le boîtier 1, tandis que le ressort 7 est maintenu avec une force réglable par une bague 26 qui est vissée dans une ouverture filetée du boîtier 1 protégée par un couvercle.

## Revendications

1. Régulateur de pression gazeuse avec un boîtier (1), présentant une entrée (2) et une sortie (3), ainsi qu'un dispositif à soupape (4) avec un passage de soupape disposé entre ladite entrée et sortie, ledit dispositif à soupape comprend un piston (5) réglable par l'intermédiaire d'une membrane (8), ledit piston séparant l'un de l'autre un disque de soupape (9) et le disque de fermeture (12), lequel est pourvu d'une ouverture d'écoulement étroite débouchant dans le passage de soupape, et ledit piston pouvant lors d'un manque de gaz être mis en contact avec un siège de soupape (10) solidaire du boîtier pour fermer le dispositif de soupape (4) caractérisé en ce qu'est prévue entre le dispositif à soupape (9) et le disque de fermeture (12) une buse coulissante (14) formant avec le piston (5) le passage de soupape avec le siège d'étanchéité (20) pour le disque de fermeture (12), ladite buse est d'un côté contrainte élastiquement en direction du siège de soupape (10) du boîtier (1) et de l'autre côté est soumise à la pression d'entrée contraire à la tension du ressort.

2. Régulateur de pression gazeuse selon la revendication 1, caractérisé en ce que la buse coulissante (14) présente une partie annulaire (16) à proximité du siège de soupape (10), soumise à la pression d'entrée.

3. Régulateur de pression gazeuse selon la revendication 2, caractérisé en ce que la partie annulaire (16) est étanchéifiée par rapport au boîtier (1) par une bague d'étanchéité (18).

4. Régulateur de pression gazeuse selon l'une des revendications 1 à 3, caractérisé en ce que la buse coulissante (14) présente une partie annulaire (19) à proximité du disque de fermeture (12), laquelle forme un siège d'étanchéité (20) pour le disque de fermeture (12).

5. Régulateur de pression gazeuse selon l'une des revendications 1 à 4, caractérisé en ce qu'une chambre (23), formée entre le boîtier (1) et la buse coulissante (14), laquelle abrite le ressort (15) qui précontraint la buse coulissante (14), est étanchéifiée de l'entrée (2) par l'intermédiaire d'un joint (21) lorsque la buse se trouve par l'action du ressort (15) dans la position de déplacement maximale par rapport au boîtier (1).
